Europäisches Patentamt

European Patent Office

Office européen des brevets

(19)

(11) Veröffentlichungsnummer: **0 369 138**
**A2**

(12) # EUROPÄISCHE PATENTANMELDUNG

(21) Anmeldenummer: **89117441.9**

(22) Anmeldetag: **21.09.89**

(51) Int. Cl.5: **B60S 3/06**

(30) Priorität: **18.11.88 DE 3839022**

(43) Veröffentlichungstag der Anmeldung:
**23.05.90 Patentblatt 90/21**

(84) Benannte Vertragsstaaten:
**DE ES FR GB IT**

(71) Anmelder: **Kleindienst GmbH**
**Argonstrasse 8**
**D-8900 Augsburg(DE)**

(72) Erfinder: **Donner, Sigmar**
**Am Hopfengarten 38**
**D-8904 Friedberg(DE)**
Erfinder: **Langanke, Armin**
**Walsertalweg 3**
**D-8900 Augsburg(DE)**
Erfinder: **Bentenrieder, Maximilian**
**Grottenweg 8**
**D-8911 Scheuring(DE)**
Erfinder: **Georg, Rolf**
**Theodor-Heuss-Strasse 8**
**D-7403 Ammerbuch-Altingen(DE)**
Erfinder: **Weissbarth, Matthias**
**Im Stäudach 40**
**D-7031 Weil im Schönbuch(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Verfahren und Vorrichtung zum Waschen von Fahrzeugen.**

(57) Die Erfindung betrifft ein Verfahren und eine Vorrichtung zum Waschen von Fahrzeugen (5) in einer Autowaschanlage (1). Das Trockenmittel, das beim Trockenvorgang das rückstandsfreie Ablaufen des Spülwassers erleichtert, wird vor einem Bürstenwaschvorgang aufgebracht und von den Waschbürsten anschließend über die Fahrzeugoberfläche gleichmäßig verteilt. Mit dem Trockenmittel können ein Waschmittel und gegebenenfalls weitere Pflege- und Konservierungsmittel in einem Auftragsvorgang gemeinsam aufgebracht werden. Dies ist möglich durch Auftrag einer Kombisubstanz oder die Mischung getrennter Substanzen vor oder während des Auftrags. Hierzu zieht eine gemeinsame Dosierpumpe (7) aus zwei oder mehr Behältern (8,9) die Substanzen ab und führt sie den Auftragsdüsen (10,11,12) zu.

FIG. 1

## Verfahren und Vorrichtung zum Waschen von Fahrzeugen

Die Erfindung betrifft ein Verfahren und eine Vorrichtung zum Waschen von Fahrzeugen in einer Autowaschanlage mit den Merkmalen im Oberbegriff des Hauptanspruchs.

In der Praxis wird das Fahrzeug erst gewaschen und anschließend gespült. Mit dem Spülwasser oder in einem separaten Vorgang danach wird ein Trockenmittel aufgetragen, das dafür sorgen soll, daß der Wasserfilm großflächig aufreißt und bei der anschließenden Trocknung möglichst vollständig vom Fahrzeug abläuft. Probleme ergeben sich hier allerdings mit der Auftragetechnik für das Trockenmittel. Aus der DE-OS 34 25 474 ist es bekannt, die Flüssigkeit in einem Spülvorhang bis knapp über die zu benetzende Fahrzeugfläche zu führen und drucklos aufzubringen. Diese Methode hat sich als aufwendig, unwirtschaftlich und nicht sehr zuverlässig erwiesen.

Es ist daher Aufgabe der vorliegenden Erfindung, den Einsatz eines Trockenmittels zu vereinfachen und zu verbessern.

Die Erfindung löst diese Aufgabe mit den Merkmalen im Kennzeichenteil des Verfahrens- und Vorrichtungsanspruchs.

Erfindungsgemäß wird das Trockenmittel nun bereits vor dem Spülvorgang aufgebracht. Dies geschieht vorteilhafterweise auch noch vor einem Bürstenwaschvorgang. Einerseits vereinfacht sich dadurch der spätere Spülvorgang. Andererseits wird die Wirksamkeit und die Wirtschaftlichkeit des Trockenmittels wesentlich erhöht. Die Waschbürsten verteilen das Trockenmittel nämlich zuverlässig auf der Fahrzeugoberfläche, was für einen besseren und gleichmäßigeren Aufriß des anschließend zugeführten Spülwassers sorgt. Beim vorbekannten Spülauftrag läuft ein Großteil des Trockenmittels ungenutzt ab. Beim erfindungsgemäßen Auftrag ist dies nicht mehr der Fall.

Mit der Erfindung ergeben sich weitere Vorteile. Das Trockenmittel kann gemeinsam mit dem Waschmittel in einem Auftragsvorgang aufgebracht werden. Dies vereinfacht den Bauaufwand der Waschanlage. Vorteilhafterweise können beide Substanzen als Shampoo oder Schaum aufgetragen werden. Es ist aber grundsätzlich auch möglich, das Trockenmittel und das Waschmittel zeitlich und/oder örtlich getrennt aufzubringen, beispielsweise beim Vor- und Rücklauf der Waschbürsten einer Portalwaschanlage oder in getrennten Bürstenstationen einer Waschstraße.

Ferner lassen sich zusätzlich noch an gleicher Stelle und in einem gemeinsamen Auftrag weitere Pflege- und Konservierungsmittel zuführen. Dies können im einzelnen Wachse, Korrosionsinhibitoren, Geruchsstoffe wie Parfümöle und dgl., Farbstoffe, fungizide und/oder bakteriozide Stoffe etc. sein.

Für das Auftragsverfahren der verschiedenen Mittel gibt es unterschiedliche Möglichkeiten. Die Mittel werden vor oder während des Auftrags gemischt. Im erstgenannten Fall kann eine vorgemischte Kombisubstanz als fertige Zubereitung eingesetzt werden, was den Aufwand an Misch- und Dosiervorrichtungen minimiert. Es kann ferner eine Vermischung bzw. auch eine Lösungsbildung von getrennt zugeführten Substanzen in der Waschanlage erfolgen. Dies kann vor oder während des Auftrags stattfinden. In allen Fällen gibt es auch Kombinationslösungen, indem einige Mittel als Teilzubereitungen vorliegen und mit Einzelsubstanzen oder weiteren Teilzubereitungen in der Waschanlage gemischt werden. In allen Fallgestaltungen vereinfacht sich der maschinentechnische Aufwand gegenüber vorbekannten Autowaschanlagen und dabei insbesondere auch der Dosieraufwand. Bei der Mischung der beiden Substanzen in der Waschanlage, insbesondere in deren Auftragevorrichtung, läßt sich außerdem das Mischungsverhältnis beeinflussen und optimal einstellen. Beim nachgeordneten Spülbogen wird nur noch Wasser zugeführt, was zur Verbesserung des Spüleffektes auch unter Druck geschehen kann.

Das Trockenmittel besteht vorzugsweise aus kationischen Tensiden. Für das Waschmittel werden waschaktive Substanzen, wie anionaktive, nichtionogene oder amphotere Tenside eingesetzt. Diese Substanzen werden unter Zugabe eventuell nötiger Lösungsvermittler innig vermischt, können je nach Wirkstoffkombination aber auch als Lösung vorliegen. Sie können damit gemeinsam aufgebracht und verarbeitet werden. Es ist auch möglich, aus diesen Stoffen eine fertig Zubereitung herzustellen und diese direkt auf das Fahrzeug aufzubringen. Die Substanzen, wie auch die angepaßten Zusatzmittel für Pflege- und Konservierungszwecke sind im Handel, insbesondere bei der Firma RMP in Ammerbuch-Altingen erhältlich.

Die Erfindung ist in den Zeichnungen beispielsweise und schematisch dargestellt. Im einzelnen zeigen:

Fig. 1: eine Draufsicht auf eine Autowaschanlage,

Fig. 2: eine Seitenansicht zu Fig. 1 mit einer Auftragevorrichtung mit zwei Auftragdüsen und

Fig. 3: eine Auftragdüse in Variation zu Fig. 2.

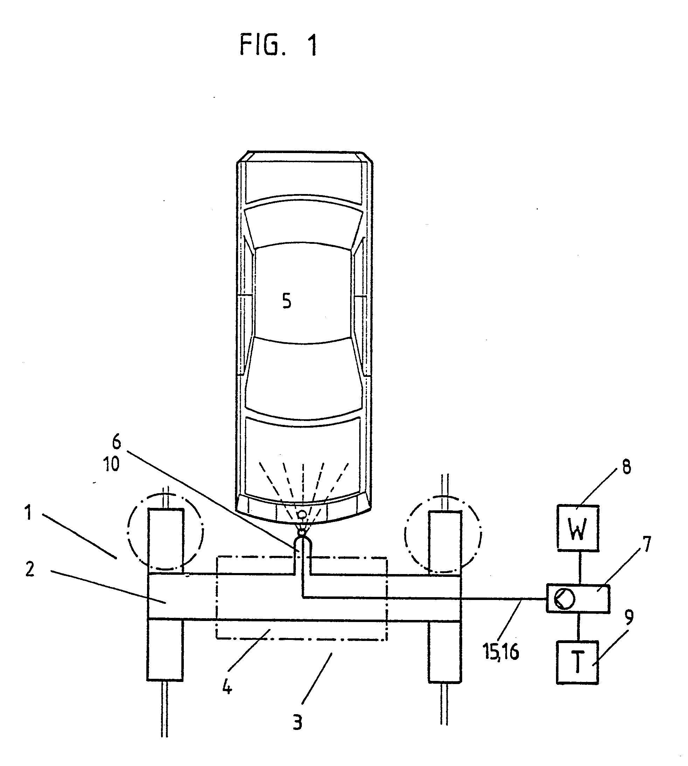

Fig. 1 zeigt eine Autowaschanlage (1), die als stationäre Anlage mit einem gegenüber dem stehenden Fahrzeug (5) fahrbaren Waschportal (2) oder als instationäre Anlage mit einem stehenden oder begrenzt beweglichen Waschportal (2) und geschleppten Fahrzeugen (5) ausgebildet ist. Das Waschportal (2) ist zugleich die erste Bürstenstation (3), an die sich in einer Waschstraße weitere Stationen, wie eine Spülstation, Trocknungsstation etc. anschließen können. In der Ausbildungsform als stationäre Anlage sind im Waschportal (2) auch eine Spülvorrichtung und eine Trocknungsvorrichtung (nicht dargestellt) integriert.

In der gezeigten Autowaschanlage (1) wird auf die Oberfläche des Fahrzeugs (5) vor dem Einwirken der Waschbürsten (4) ein Trockenmittel (T) aufgebracht. Im bevorzugten Ausführungsbeispiel wird das Trockenmittel mit einem Waschmittel (W) gemeinsam und in einem Vorgang mittels einer Auftragevorrichtung (6) aufgebracht. Die Substanzen können in flüssiger Gestalt oder schaumförmig aufgebracht werden. Der Auftrag erfolgt vor allem auf die oberen und seitlichen Fahrzeugflächen.

Unter den gleichen verfahrens- und vorrichtungstechnischen Bedingungen können auch weitere Pflege- und Konservierungsmittel aufgetragen werden. Die nachfolgend beschriebenen Ausführungsbeispiele befassen sich nur mit dem Wasch- und Trockenmittel. Das Verfahren und die Vorrichtung sind für die Zusatzmittel entsprechend zu ergänzen.

In Fig. 1 ist die Auftragvorrichtung (6) in vereinfachter Gestalt mit nur einer Auftragsprühdüse (10) dargestellt. In der Praxis können weitere Düsen über das Portal verteilt sein.

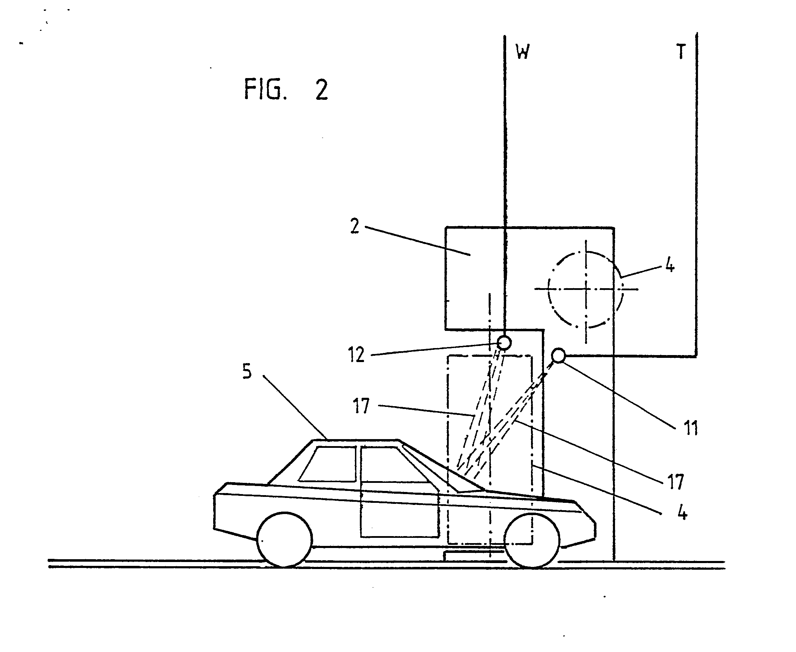

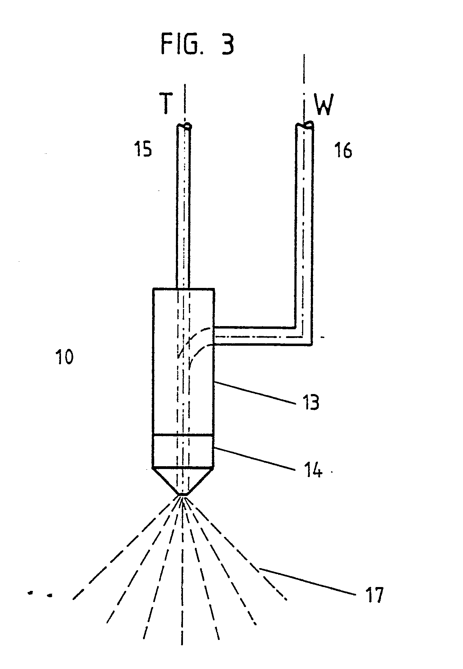

Zum gemeinsamen Auftrag können das Waschmittel (W) und das Trockenmittel (T) auf verschiedene Weise und zu unterschiedlichen Zeiten gemischt werden. In der einfachsten Form liegen die Substanzen in einer vorgefertigten Zubereitung vor und werden aus einem Behälter über eine Dosierpumpe der Auftragvorrichtung gemeinsam zugeführt und versprüht. Fig. 1 zeigt demgegenüber eine Variante, in der die beiden Substanzen in getrennten Behältern (8,9) vorliegen und über eine gemeinsame oder zwei getrennte Dosierpumpen (7) mittels Leitungen (15,16) den Auftragsprühdüsen (10,11,12) (vgl. Fig. 2 und 3) zugeführt werden.

Im Ausführungsbeispiel der Fig. 2 sind für das Waschmittel (W) und das Trockenmittel (T) getrennte Auftragsprühdüsen (11,12) vorgesehen, aus denen die Substanzen unvermischt in einem Sprühstrahl (17) austreten. Die beiden Düsen (11,12) sind allerdings schräg zueinander gerichtet, so daß sich die Sprühstrahlen (17) kreuzen. Dies kann auf der Fahrzeugoberfläche oder davor geschehen. Die Vermischung der beiden Substanzen findet beim Kreuzen der beiden Sprühstrahlen (17) im freien Raum oder bei ihrem Auftreffen auf der Fahrzeugoberfläche statt. Die Substanzen können hier wahlweise als Flüssigkeit oder Schaum aufgetragen werden. Die Auftragsprühdüsen (11,12) sind in der Praxis mehrfach vorhanden und verteilt über dem Portalbogen angeordnet.

Im Ausführungsbeispiel der Fig. 3 ist eine einzelne Auftragsprühdüse (10) vorgesehen, in oder vor der die Mischung der beiden Substanzen (W,T) erfolgt, die dann gemeinsam im Sprühstrahl (17) austreten. Die Leitungen (15) für das Trockenmittel und (16) für das Waschmittel münden in einem Mischkopf (13), der die Substanzen nach Art eines Venturi-Rohres miteinander verwirbelt und vermischt. Hierbei kann über geeignete Ausbildung des Mischkopfes (13) zugleich eine gezielte Dosierung erfolgen. Der Mischkopf (13) ist insbesondere gemäß der deutschen Patentanmeldung P 36 26 481 ausgebildet. An den Mischkopf (13) schließt sich ein Sprühkopf (14) an, aus dem der Sprühstrahl (17) austritt.

Das Substanzengemisch wird nach dem Auftrag durch die Waschbürste(n) (4) auf der Fahrzeugoberfläche in optimaler Konzentration verteilt. Das Waschportal (2) kann hierzu ein oder mehrere horizontale und/oder vertikale Waschbürsten (4) aufweisen.

Beim anschließenden Spülvorgang ergibt sich ein großflächiger Aufriß, wobei das Wasser und die Tenside in großen Lachen ablaufen. Auf der Fahrzeugoberfläche bleibt ein dünner Film hydrophober Substanzen zurück, der bereits einen glanzsteigernden Effekt ergibt. Werden die entsprechenden Zusätze aufgebracht, ermöglichen sie einen verbesserten Korrosionsschutz oder eine auf längere Zeit wirksame Hydrophobie oder Konservierung der Fahrzeugoberfläche.

## STÜCKLISTE

1 Autowaschanlage 2 Waschportal 3 Bürstensation 4 Waschbürste 5 Fahrzeug 6 Auftragvorrichtung 7 Dosierpumpe 8 Behälter 9 Behälter 10 Auftragsprühdüse, einzeln 11 Auftragsprühdüse 12 Auftragsprühdüse 13 Mischkopf 14 Sprühkopf 15 Leitung 16 Leitung 17 Sprühstrahl

## Ansprüche

1.) Verfahren zum Waschen von Fahrzeugen in einer Autowaschanlage, bei dem ein Trockenmittel auf die Fahrzeuge aufgebracht wird, dadurch **gekennzeichnet**, daß das Trockenmittel vor einem Bürstenwaschvorgang aufgebracht wird.

2.) Verfahren nach Anspruch 1, dadurch **gekennzeichnet**, daß das Trockenmittel und ein Waschmittel in einem Auftragsvorgang gemeinsam aufgebracht werden.

3.) Verfahren nach Anspruch 1 oder 2, dadurch

gekennzeichnet, daß zusammen mit dem Trokkenmittel weitere Pflege- und Konservierungsmittel aufgebracht werden.

4.) Verfahren nach Anspruch 2 oder 3, dadurch gekennzeichnet, daß die verschiedenen Mittel als Substanzen vorliegen, die vor oder während des Auftrags gemischt werden.

5.) Verfahren nach Anspruch 4, dadurch gekennzeichnet, daß die Mittel getrennt der Auftragsprühdüse zugeführt und in der Auftragsprühdüse vermischt werden.

6.) Verfahren nach Anspruch 4, dadurch gekennzeichnet, daß die Mittel aus getrennten Auftragsprühdüsen versprüht werden, wobei die Sprühstrahlen aufeinander treffen und die Substanzen sich an der Treffstelle oder der Fahrzeugoberfläche vermischen.

7.) Verfahren nach Anspruch 4, dadurch gekennzeichnet, daß die Mittel als fertige Zubereitung vorliegen und als solche aufgetragen werden.

8.) Vorrichtung zur Durchführung des Verfahrens nach Anspruch 1 oder einem der folgenden, dadurch gekennzeichnet, daß vor oder am Waschportal (2) der ersten Bürstenstation (3) eine Auftragvorrichtung (6) mit mindestens einer Dosierpumpe (7) angeordnet ist, die aus zwei oder mehr Behältern (8,9) zumindest ein Waschmittel und ein Trockenmittel zu einer gemeinsamen Auftragsprühdüse (10) oder zu zwei getrennten und gegeneinander gerichteten Auftragsprühdüsen (11,12) fördert.

# FIG. 1

FIG. 2

W    T

2

4

12

5

17

11

17

4

Kleindienst GmbH
117-835

# FIG. 3

T | W

15

16

10

13

14

17

Kleindienst GmbH
117-835